# FASCICULE DE BREVET EUROPEEN

(11) **EP 4 543 207 B1**
(45) Date de publication et mention de la délivrance du brevet: **18.11.2026**
(21) Numéro de dépôt: 23735298.4
(22) Date de dépôt: 26.06.2023
(51) Int. Cl.: A01N 59/00, A01P 3/00

(54) **UTILISATION DE POLYMERES D'ALUMINOSILICATE A TITRE D'INGREDIENT ACTIF CONTRE LES MICROORGANISMES PHYTOPATHOGENES**
VERWENDUNG VON ALUMINOSILICATPOLYMEREN ALS AKTIVKOMPONENTE GEGEN PHYTOPATHOGENER MIKROORGANISMEN
USE OF ALUMINOSILICATE POLYMERS AS ACTIVE INGREDIENTS AGAINST PHYTOPATHOGENIC MICROORGANISMS

(30) Priorité: 27.06.2022 FR 2206380
(43) Date de publication de la demande: 30.04.2025
(73) Titulaire: Commissariat à l'Energie Atomique et aux Energies Alternatives, 75015 Paris (FR); Centre National de la Recherche Scientifique, 75016 Paris (FR)
(72) Inventeur: PICOT, Pierre, 91191 Gif sur Yvette (FR); THILL, Antoine, 91191 Gif sur Yvette (FR)
(74) Mandataire: IPAZ
(86) Numéro de dépôt international: PCT/EP2023/067323
(87) Numéro de publication internationale: WO 2024/002971

(56) Documents cités:
- CN-A- 106 721 029
- JP-A- 2003 278 082
- US-A- 5 813 452
- US-A1- 2001 003 000
- US-A1- 2017 339 951

## Description

La présente invention s'applique au domaine général des produits phytosanitaires et de la lutte contre les microorganismes phytopathogènes. En particulier, l'invention est relative à l'utilisation de polymères d'aluminosilicate de type imogolite ou allophane à titre d'ingrédient actif contre les microorganismes phytopathogènes, notamment les champignons phytopathogènes tels que les pseudochampignons de la famille des Peronosporaceae de la classe des Oomycètes comme par exemple *Plasmopara viticola* responsable du mildiou et les bactéries phytopathogènes. L'invention est également relative à un procédé pour lutter contre l'apparition de maladies occasionnées par des microorganismes phytopathogènes chez les plantes comprenant au moins une étape d'application, sur lesdites plantes, d'une composition comprenant au moins un polymère d'aluminosilicate de type imogolite ou allophane à titre d'ingrédient actif.

Pour un agriculteur, les maladies auxquelles ses plantes sont régulièrement exposées peuvent avoir des conséquences désastreuses sur les rendements, la qualité et la survie de ses cultures. Par exemple la pourriture molle, causant la nécrose des végétaux, peut entraîner des pertes économiques importantes.

Les produits phytosanitaires ou pesticides utilisés dans l'agriculture permettent de limiter le développement d'organismes susceptibles d'affecter les cultures et les récoltes. Les agresseurs sont des microorganismes phytopathogènes et comprennent notamment des champignons et des bactéries.

À titre d'exemple, le mildiou est une maladie cryptogamique affectant les feuilles et les grappes des vignes notamment, mais que l'on rencontre également dans d'autres cultures (pommes de terre, tomates...). Il s'agit d'une maladie qui touche tout le vignoble français (à différents degrés suivant le bassin viticole), dont la pression parasitaire devient forte pratiquement une année sur deux. De plus, si aucun traitement n'est employé, elle peut entrainer : des déformations des pousses, une augmentation de la vulnérabilité de la vigne, une altération de la qualité du vin ou encore une baisse du rendement (pouvant atteindre jusqu'à 85 %).

À l'heure actuelle, dans la lutte contre le mildiou de la vigne, deux moyens s'offrent aux viticulteurs : la lutte conventionnelle (mesures prophylactiques et pesticides) et les produits de biocontrôle. Les mesures prophylactiques telles que le palissage, le rognage soigné ou la taille requièrent une forte main d'œuvre et ont une efficacité limitée. Les pesticides de lutte contre le mildiou (folpel, mancozèbe, fosétyl, etc...) sont des produits issus de la chimie de synthèse. Il s'agit des seuls moyens efficaces à ce jour pour prévenir et/ou enrayer les maladies mais leur utilisation est très controversée.

Depuis la fin du XIXème siècle et la mise au point de la bouillie bordelaise, le cuivre est un élément majeur des méthodes de protection des cultures contre diverses maladies (mildious, certaines mycoses et la plupart des bactérioses), en particulier sur la vigne, les productions fruitières et les cultures légumières. S'il reste aujourd'hui largement employé dans diverses formes d'agriculture dites "conventionnelles", aux côtés d'autres pesticides, le cuivre joue un rôle crucial dans les systèmes agrobiologiques, car c'est actuellement la seule substance active homologuée en agriculture biologique ayant à la fois un effet biocide fort et une large gamme d'action. Cependant, les composés à base de cuivre s'accumulent dans les sols et sont toxiques pour l'homme, les microorganismes et l'environnement. Si la plupart des utilisations du cuivre sont justifiées par son efficacité biologique, elles posent des problèmes écotoxicologiques (risques avérés pour les populations microbiennes du sol, les vers de terre, certains organismes aquatiques et des auxiliaires des cultures). La mise en évidence de ces impacts environnementaux du cuivre a motivé des restrictions réglementaires d'usage (plafonnement des doses applicables par hectare et par an), et même son interdiction comme pesticide dans certains pays européens (Pays-Bas, Danemark), ce qui génère des distorsions de concurrence entre pays.

Le biocontrôle est une alternative de choix pour limiter les risques de santé publique et environnementaux des traitements des cultures. Les produits de biocontrôle sont « des agents et des produits utilisant des mécanismes naturels dans le cadre de la lutte intégrée contre les ennemis des cultures » (selon l'Article L253-6 du Code rural et de la pêche maritime). Ils recouvrent des macroorganismes (invertébrés, insectes, acariens ou nématodes), des microorganismes (champignons, bactéries, virus), des médiateurs chimiques comme les phéromones sexuelles et des substances naturelles (substances d'origine végétale, animale ou minérale). Ces produits utilisés en début de saison, lorsque les pressions parasitaires sont faibles à moyennes, montrent une bonne efficacité. Ils sont toutefois utilisés en combinaison avec des produits phytosanitaires plus classiques (le cuivre pour le mildiou et le soufre pour une autre maladie cryptogamique l'oïdium) et permettent ainsi de diminuer les quantités utilisées de ces pesticides conventionnels. Cependant, en cas de pressions parasitaires élevées, au moment de la floraison par exemple, les produits de biocontrôle ne présentent aucune efficacité. US 5 813 452 évoque les propriétés antifongiques des zéolites.

Enfin, l'eau oxygénée ou peroxyde d'hydrogène a des effets bactéricides et fongicides connus à fort pouvoir oxydant (PO) du fait de la liaison O-O qui est très réactive. C'est un biocide autorisé par l'union européenne et utilisé dans la protection des plantes. Toutefois, son instabilité dans le temps ne permet pas d'utiliser ce composé comme produit préventif, notamment en viticulture.

Il existe donc un besoin pour de nouveaux produits abordables présentant une efficacité comparable à celle des produits cupriques, utilisables tout au long de la saison et ayant un faible impact environnemental.

Ainsi, le but de la présente invention est de pallier les inconvénients de l'art antérieur précité et de fournir une solution permettant de lutter efficacement contre les microorganismes phytopathogènes et ainsi de prévenir ou de retarder l'apparition de maladies occasionnées par des microorganismes phytopathogènes chez les plantes.

La présente invention a ainsi pour premier objet l'utilisation d'au moins un polymère d'aluminosilicate ayant une structure locale de type imogolite à titre d'ingrédient actif contre les microorganismes phytopathogènes.

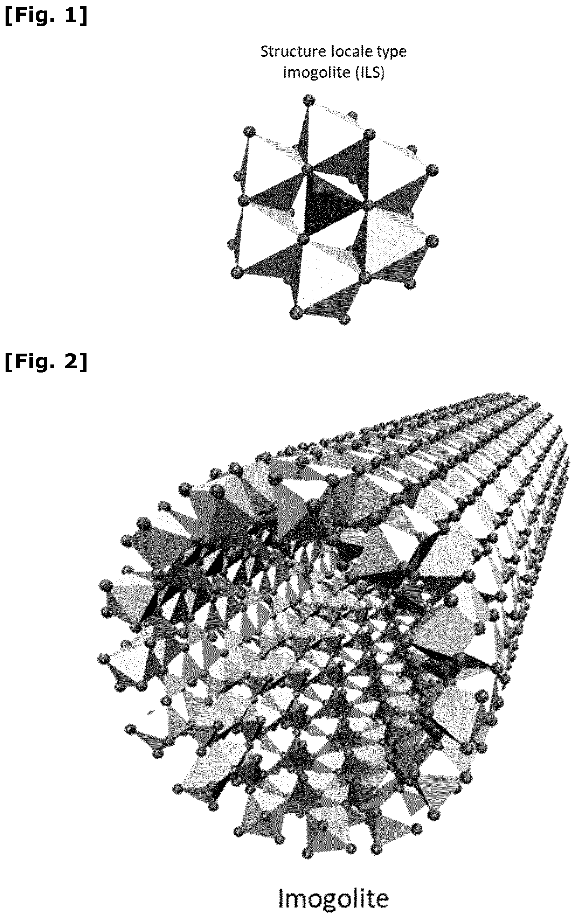

Selon l'invention, une structure locale de type imogolite (ou ILS, de l'expression anglaise *« Imogolite Local Structure* ») est caractérisée par l'association d'atomes d'aluminium et de silicium avec un rapport Al/Si de 2:1. Dans la structure idéale, les atomes d'aluminium sont en coordinence octaédrique liés entre eux par arrêtes. Les atomes de silicium sont isolés et en coordinence tétraédrique. Ils sont reliés à la couche dioctaédrique d'aluminium par trois liaisons Si-O-Al (voir représentation 3D sur la figure 1 annexée).

Les polymères d'aluminosilicate de type ILS regroupent les imogolites, les allophanes et les proto-imogolites, leurs dérivés respectifs et leurs mélanges.

Les imogolites regroupent les formes tubulaires de ces polymères d'aluminosilicate de type ILS. L'imogolite est un minéral de la famille des aluminosilicates hydratés (groupe des minéraux argileux), de formule chimique moyenne Al₂SiO₃(OH)₄. Il est présent à l'état naturel dans les cendres volcaniques et dans certains sols. La structure atomique de l'imogolite a été publiée en 1972 (P.D.G. Cradwick et al., « Imogolite, a hydrated aluminium silicate of tubular structure », Nature Physical Science, vol. 240, 25 décembre 1972, p. 187-189). L'imogolite a une structure nanotubulaire bien définie avec un diamètre externe monodisperse d'environ 2 à 3 nm et une longueur polydisperse d'environ 10 à 1000 nm (voir la représentation 3D de l'imogolite sur la figure 2 annexée).

Selon une forme de réalisation particulière de l'invention, les polymères d'aluminosilicate sont choisis parmi les nanotubes d'imogolite et les nanotubes de dérivés d'imogolite.

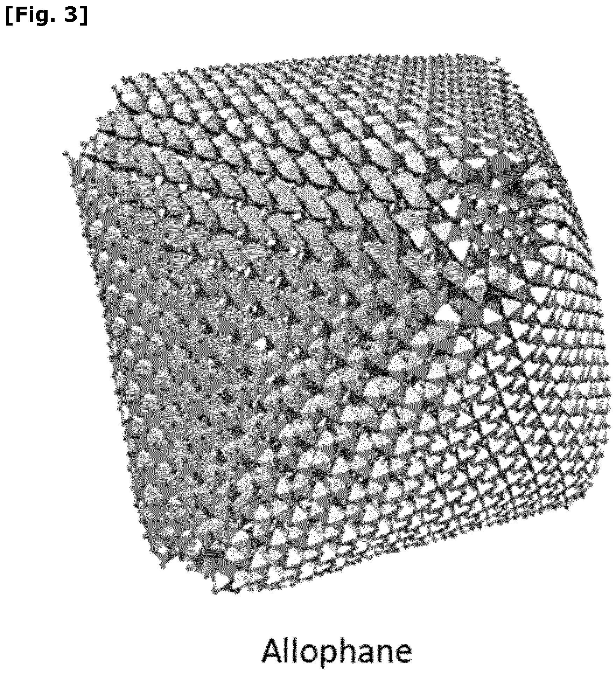

Les allophanes sont des nanosphères d'aluminosilicate de formule chimique moyenne Al₂SiO₃(OH)₄. Ces nanosphères ont généralement un diamètre de 3 à 5 nm et qui existent également à l'état naturel dans des gisements naturels. Elles sont apparentées aux imogolites en ce sens qu'elles partagent la même structure locale de type ILS. Une représentation en 3D de la structure des allophanes est donnée à la figure 3 annexée.

Selon une forme de réalisation particulière de l'invention, les polymères d'aluminosilicate sont choisis parmi les nanosphères d'allophane et les nanosphères de dérivés d'allophane.

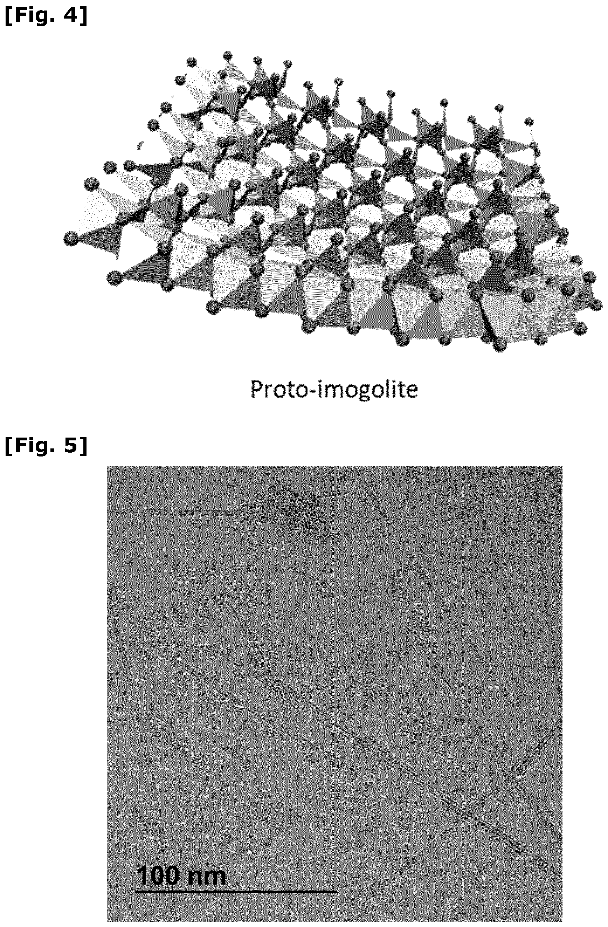

Les proto-imogolites sont des nanostructures courbes non fermées d'aluminosilicate de formule chimique moyenne Al₂SiO₃(OH)₄ ayant une taille comprise entre 1 et 6 nm qui existent également à l'état naturel dans des gisements naturels. Elles sont apparentées aux imogolites en ce sens qu'elles partagent la même structure locale de type ILS. Une représentation en 3D de la structure des proto-imogolites est donnée à la figure 4 annexée.

Selon une forme de réalisation particulière de l'invention, les polymères d'aluminosilicate sont choisis parmi les nanostructures courbes non fermées de type proto-imogolite et les nanostructures de dérivés de proto-imogolite.

On entend par dérivés, les polymère d'aluminosilicate ayant une structure locale type ILS, à savoir de type imogolite, allophane ou proto-imogolite, dans lesquels, une partie des atomes constitutifs a été remplacée par des atomes autres que l'aluminium et le silicium. Par exemple, cela regroupe :
- les imogolites, les allophanes ou les proto-imogolites dans lesquels les atomes d'aluminium ont été remplacés en partie par d'autres cations métalliques comme le gallium, l'indium, le fer, le cobalt, le nickel ou le cuivre.
- les imogolites, les allophanes ou les proto-imogolites dans lesquels les atomes de silicium ont été remplacés tout ou partie par d'autres cations comme le germanium, l'arsenic, le phosphore, le carbone, l'aluminium, le fer.

Ces dérivés peuvent également être respectivement dénommés imogolites dopés, allophanes dopés et proto-imogolites dopés.

Selon l'invention, les imogolites, les allophanes, les proto-imogolites et leurs dérivés dopés peuvent également être fonctionnalisés.

Ainsi, selon l'invention, les imogolites, les allophanes, les proto-imogolites et leurs dérivés peuvent être choisis parmi les polymères d'aluminosilicates ayant une structure locale de type ILS dans lesquels au moins une partie des groupements hydroxyle de surface ont été fonctionnalisés par un groupement choisi parmi les groupements alkyle, alcène, alcyne, amino, thiol, halogénure, phényle, silane et leurs mélanges.

Selon une forme de réalisation préférée de l'invention, les polymères d'aluminosilicates sont choisis parmi des dérivés d'imogolite se présentant sous la forme de nanotubes ayant un diamètre externe allant de 3 à 3,6 nm, de préférence de 3,1 à 3,4 nm, ledit diamètre étant mesuré par diffusion des rayons X aux petits angles (SAXS, de l'expression anglophone « *Small Angle X-ray Scattering* ») pour lesquels une partie des atomes de silicium a été remplacée par des atomes de germanium, une partie des atomes d'aluminium a été remplacée par des atomes de fer et une partie des groupes hydroxyles a été remplacée par des groupes méthyles.

Les dérivés d'imogolite, également dénommés « imogolites hybrides », utilisables selon la présente invention peuvent être préparés selon le procédé décrit dans la demande internationale WO2014/080370.

Selon une forme de réalisation préférée de l'invention, les polymères d'aluminosilicate sont choisis parmi des dérivés d'allophane se présentant sous la forme de nanosphères ayant un diamètre externe allant de 3 à 6 nm ledit diamètre étant mesuré par SAXS.

Les dérivés d'allophane, également dénommés « allophanes hybrides », utilisables selon la présente invention peuvent être préparés selon le procédé décrit dans la demande de brevet FR3 023 181.

Selon une forme de réalisation préférée de l'invention, les dérivés de proto-imogolite sont choisis parmi des nanostructures présentant une taille de comprise entre 1 et 6 nm, ladite taille étant mesurée par SAXS.

Selon une forme de réalisation particulière et préférée de l'invention, lesdits polymères d'aluminosilicate sont choisis parmi les mélanges de polymères constitués de 5 à 90 % en masse environ d'imogolite et/ou d'un dérivé d'imogolite, de 5 à 90 % en masse environ d'allophane et/ou d'un dérivé d'allophane, et de 5 à 90 % en masse environ de proto-imogolite et/ou d'un dérivé de proto-imogolite, la somme de ces pourcentages individuels étant égale à 100 %. Parmi de tels mélanges, on préfère tout particulièrement les mélanges constitués d'environ 40 à 70 % en masse d'imogolite et/ou de dérivé d'imogolite, d'environ 30 à 50 % en masse d'allophane et/ou de dérivé d'allophane et d'environ 5 à 20 % en masse de proto-imogolite et/ou de dérivé de proto-imogolite, la somme de ces pourcentages individuels étant égale à 100 %. Parmi de tels mélanges, on préfère encore plus particulièrement les mélanges constitué d'environ 55 % en masse d'imogolite et/ou de dérivé d'imogolite, d'environ 40 % en masse d'allophane et/ou de dérivé d'allophane et d'environ 5 % en masse de proto-imogolite et/ou de dérivé de proto-imogolite.

L'utilisation de ces polymères d'aluminosilicate, n'a pas d'impact à long terme sur l'environnement car une fois incorporés dans les sols, ces polymères se décomposent en d'autres argiles déjà présents (suivant la géologie locale). Ils présentent par ailleurs une efficacité comparable à celles des produits à base de cuivre habituellement utilisés.

Selon une première forme de réalisation particulière et préférée de l'invention, les polymères d'aluminosilicate sont utilisés en combinaison avec du peroxyde d'hydrogène.

En effet, ainsi que cela est démontré dans les exemples illustrant la présente invention, l'utilisation conjointe d'au moins un polymère d'aluminosilicate et de peroxyde d'hydrogène permet d'améliorer l'efficacité des polymères d'aluminosilicate contre la croissance des phytopathogènes et donc de diminuer les doses auxquelles ils peuvent être utilisés de manière efficace (diminution de la concentration minimale inhibitrice des polymères d'aluminosilicate).

Selon cette forme de réalisation particulière de l'invention, l'utilisation optionnelle de peroxyde d'hydrogène n'a pas non plus d'impact environnemental puisque ses produits de dégradation sont l'eau et l'oxygène.

Toujours selon cette forme de réalisation particulière de l'invention, le rapport massique polymères d'aluminosilicate / peroxyde d'hydrogène peut varier de 1:0,01 à 1:0,8 environ, et encore plus préférentielle de 1:0,1 à 1:0,4 environ.

Selon une seconde forme de réalisation particulière et préférée de l'invention, les polymères d'aluminosilicate sont choisis parmi des allophanes non dopés. Cela signifie que ces allophanes ne comportent pas de cations métalliques tels que le gallium, l'indium, le fer, le cobalt, le nickel, ou bien encore le cuivre. Toujours selon cette forme de réalisation, lesdits allophanes non dopés sont de préférence utilisés sans être combinés à du peroxyde d'hydrogène.

Les microorganismes phytopathogènes contre lesquels les polymères d'aluminosilicates utilisables conformément à l'invention sont efficaces peuvent être des champignons phytopathogènes ou des bactéries phytopathogènes.

Parmi les champignons phytopathogènes, on peut en particulier mentionner les pseudochampignons de la famille des *Peronosporaceae* de la classe des Oomycètes comme par exemple *Plasmopara viticola* responsable du mildiou de la vigne ou encore ceux de la famille des *Pythiaceae* comme par exemple *Phytophthora infestans* responsable du mildiou de la pomme de terre et de la tomate, les champignons Ascomycètes responsable de la tavelure des arbres fruitiers comme par exemple *Venturia inaequalis* responsable de la tavelure du pommier ou ceux appartenant à l'ordre des Erysiphales et à la famille des érysiphacées qui sont responsables de l'oïdium comme par exemple *Erysiphe necator* responsable de l'oïdium de la vigne ou ceux appartenant à la famille des *Helotiaceae* comme par exemple *Pseudopezicula tracheiphila* responsable du rougeot parasitaire de la vigne (brenner) ou ceux de la famille des *Venturiaceae* comme par exemple *Spilocaea oleaginea* responsable du cycloconium (maladie de l'œil de paon) de l'olivier ou les champignons de la famille des *Sclerotiniaceae* et du genre *Monilinia,* dont *Monilinia fructigena* qui s'attaque principalement aux fruits à pépins et *Monilinia laxa* aux fruits à noyau, responsables de la moniliose ou ceux de l'ordre des *Taphrinales* et de la famille des *Taphrinaceae* comme par exemple *Taphrina deformans* responsable de la cloque du pêcher ou ceux de la famille des *Botryosphaeriaceae* comme par exemple *Guignardia bidwellii* responsable du black rot (ou pourriture noire) ou les champignons nécrotrophes *botrytis* de la famille des *Sclerotiniaceae* comme par exemple *botrytis cinerea* responsable de la pourriture grise (Botrytis) ou encore ceux de la famille des *Pleosporaceae* comme par exemple *Alternaria solani* responsable de la brûlure alternarienne (alternariose) chez la tomate et la pomme de terre, les champignons *Phoma* de la famille des *Sphaerioidaceae* de la classe Cœlomycètes comme par exemple *Phomopsis viticola* responsable de l'excoriose.

Parmi les phytobactéries, on peut en particulier mentionner *Ralstonia solanacearum* de la famille des *Burkholderiaceae* responsable de la pourriture brune de la pomme de terre, les protéobactéries de la famille des *Comamonadaceae* comme par exemple *Xylophilus ampelinus* responsable de la nécrose bactérienne de la vigne ou celles de la famille des *Pseudomonadaceae* comme par exemple *Pseudomonas savastanoï* responsable de la bactériose de l'olivier ou celles de la famille des *Xanthomonadaceae* comme par exemple *Xanthomonas campestris pv. Vesicatoria* responsable des taches bactériennes chez la tomate ou celles de la famille des *Pseudomonadaceae* comme par exemple *Pseudomonas syringae pv. Lachrymans* responsable de la tache angulaire chez le concombre.

Selon une forme de réalisation particulièrement préférée, les polymères d'aluminosilicate selon l'invention sont utilisés à titre de fongicide, et tout particulièrement contre les pseudochampignons de la famille des Peronosporaceae de la classe des Oomycètes, tout préférentiellement contre *Plasmopara viticola.*

L'invention a également pour second objet un procédé pour lutter contre l'apparition de maladies occasionnées par des microorganismes phytopathogènes chez les plantes, ledit procédé comprenant au moins une étape d'application, sur lesdites plantes, d'une composition comprenant, à titre d'ingrédient actif contre lesdits microorganismes phytopathogènes, au moins un polymère d'aluminosilicate ayant une structure locale de type ILS.

Les polymères d'aluminosilicate à structure locale de type ILS sont de préférence choisis parmi les imogolites, les allophanes, les proto-imogolites, leurs dérivés respectifs et leurs mélanges.

Selon ce second objet, les polymères d'aluminosilicate sont tels que définis selon le premier objet de l'invention.

De la même manière, les microorganismes phytopathogènes ciblés par le procédé selon l'invention sont ceux listés ci-dessus selon le premier objet de l'invention.

Ainsi, le procédé conforme à la présente invention permet de lutter contre les maladies des plantes occasionnées par des champignons phytopathogènes ou des bactéries phytopathogènes.

Selon une forme de réalisation particulière et préférée de l'invention, le procédé est un procédé pour lutter contre les maladies des plantes occasionnées par les pseudochampignons de la famille des Peronosporaceae de la classe des Oomycètes, tout préférentiellement contre *Plasmopara viticola.* Selon cette forme de réalisation particulière, le procédé est appliqué au traitement de la vigne, des pieds de pommes de terre ou des pieds de tomates, tout préférentiellement de la vigne.

Selon une forme de réalisation préférée de l'invention, la composition est une composition liquide comprenant ledit au moins un polymère d'aluminosilicate et de l'eau.

La concentration en polymère d'aluminosilicate au sein de ladite composition varie généralement de 0,1 à 100 g/L environ, préférentiellement de 0,2 à 50 g/L environ et encore plus préférentiellement de 0,5 à 30 g/L environ.

La composition utilisable selon le procédé conforme à l'invention peut aussi se présenter sous la forme d'une composition concentrée à diluer, d'une poudre ou de granulés à disperser au moment de l'emploi à la concentration désirée.

Selon une première forme de réalisation préférée de l'invention, ladite composition contient du peroxyde d'hydrogène. Dans ce cas, la quantité de peroxyde d'hydrogène varie généralement de 0,05 à 50 g/L, préférentiellement de 0,1 à 25 g/L environ et encore plus préférentiellement de 0,25 à 15 g/L environ.

Toujours selon cette forme de réalisation, le rapport massique polymères d'aluminosilicate / peroxyde d'hydrogène varie de préférence de 1:0,01 à 1:0,8 environ, et encore plus préférentielle de 1:0,1 à 1:0,4 environ.

Selon une seconde forme de réalisation préférée de l'invention, ladite composition ne contient pas de peroxyde d'hydrogène. Dans ce cas, les polymères d'aluminosilicates sont de préférence choisis parmi les allophanes, et encore plus préférentiellement parmi les allophanes non dopés.

La composition mise en œuvre selon le procédé conforme à l'invention peut en outre renfermer un ou plusieurs adjuvants classiquement utilisés dans les produits phytosanitaires tels que des agents de pulvérisation, des agents anti-mousse, des agents mouillants, des agents thixotropes, des agents compatibilisants, des agents stabilisants du pH, etc...

L'étape d'application peut consister en une étape d'épandage ou de pulvérisation de ladite composition sur les parties aériennes de la plante à traiter.

La quantité de composition appliquée sur les plantes pourra varier en fonction de la concentration en polymères d'aluminosilicate dans ladite composition.

Ainsi la quantité de composition appliquée sur les plantes sera adaptée de telle sorte que la dose de polymères d'aluminosilicate soit comprise entre 100 g et 5 kg environ par hectare et de préférence entre 500 g et 3 kg environ par hectare.

Le procédé conforme à l'invention peut comprendre plusieurs étapes d'application au cours du temps en fonction de l'espèce de la plante à traiter, des conditions météorologiques et des prévisions d'occurrence des microorganismes phytopathogènes. À titre d'exemple, lorsque le procédé est mis en œuvre pour lutter contre le mildiou, notamment de la vigne, le nombre d'applications de ladite composition varie de préférence de 5 à 15 applications par an en moyenne, avec une première application au printemps, par exemple en avril, puis les applications suivantes tous les 4 jours à toutes les 2 à 3 semaines suivant les conditions météorologiques.

D'autres caractéristiques, variantes et avantages du procédé selon l'invention ressortiront mieux à la lecture des exemples de réalisation qui vont suivre, donnés à titre illustratif et non limitatif de l'invention ainsi que des figures annexées dans lesquelles :
- la figure 1 est une représentation schématique en 3D de la structure locale de type ILS. Sur cette figure, les octaèdres d'aluminium sont représentés en blanc et nuances de gris, le tétraèdre de silicium est en noir et les sphères correspondent aux atomes d'oxygène. Les atomes d'hydrogène ne sont pas représentés ;
- la figure 2 est une représentation schématique en 3D de la structure de l'imogolite. Sur cette figure, les octaèdres d'aluminium sont représentés en blanc et nuances de gris, les tétraèdres de silicium en noir et les sphères correspondent aux atomes d'oxygène. Les atomes d'hydrogène ne sont pas représentés ;
- la figure 3 est une représentation schématique en 3D de la structure de l'allophane. Sur cette figure, les octaèdres d'aluminium sont représentés en blanc et nuances de gris, les tétraèdres de silicium en noir et les sphères correspondent aux atomes d'oxygène. Les atomes d'hydrogène ne sont pas représentés;
- la figure 4 est une représentation schématique en 3D de la structure de la proto-imogolite. Sur cette figure, les octaèdres d'aluminium sont représentés en blanc et nuances de gris, les tétraèdres de silicium en noir et les sphères correspondent aux atomes d'oxygène. Les atomes d'hydrogène ne sont pas représentés;
- la figure 5 est une photographie de cryo-microscopie électronique à transmission (cryo-MET) du polymère d'aluminosilicate majoritairement (> 90 % en masse) de type imogolite préparé à l'exemple 1 ;

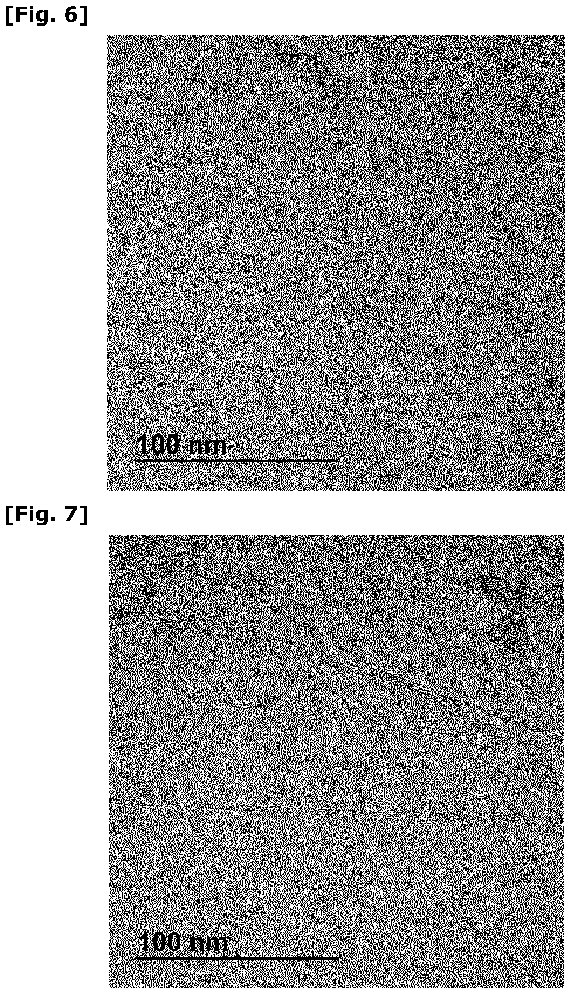

- la figure 6 est une photographie de cryo-microscopie électronique à transmission (cryo-MET) du polymère d'aluminosilicate majoritairement (> 90 % en masse) de type allophane préparé à l'exemple 2 ;
- la figure 7 est une photographie de cryo-microscopie électronique à transmission (cryo-MET) d'un mélange de polymères d'aluminosilicate de type imogolite, allophane et proto-imogolite préparé à l'exemple 3 ;

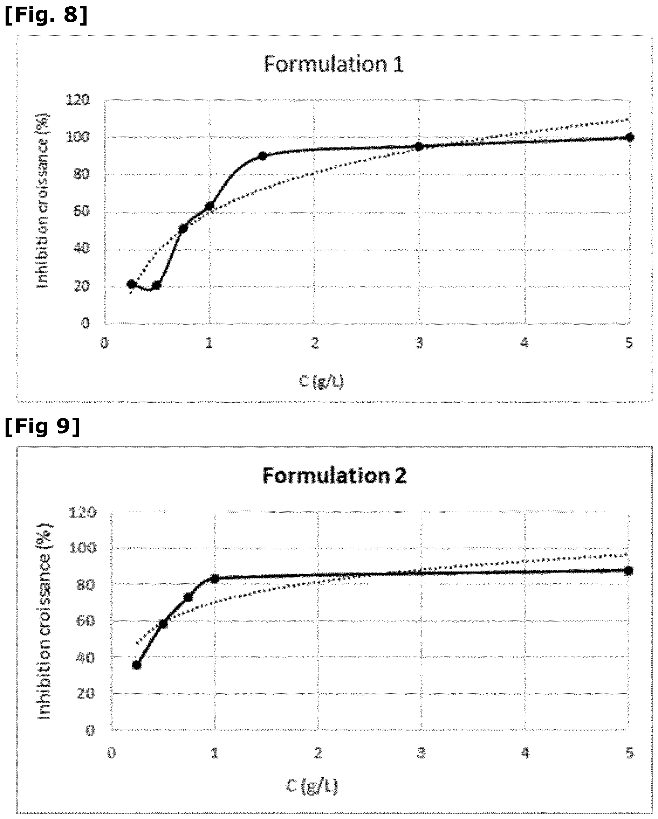

- la figure 8 représente le pourcentage d'inhibition de la croissance *in vitro* sur des disques de feuilles de vigne du champignon *Plasmopara viticola* d'une composition comprenant majoritairement (> 90 % en masse) un polymère d'aluminosilicate de type imogolite et du peroxyde d'hydrogène (formulation 1) en fonction de la dose testée (en g/L) ;
- la figure 9 représente le pourcentage d'inhibition de la croissance *in vitro* sur des disques de feuilles de vigne du champignon *Plasmopara viticola* d'une composition comprenant majoritairement (> 90 % en masse) un polymère d'aluminosilicate de type imogolite (formulation 2) en fonction de la dose testée (en g/L) ;

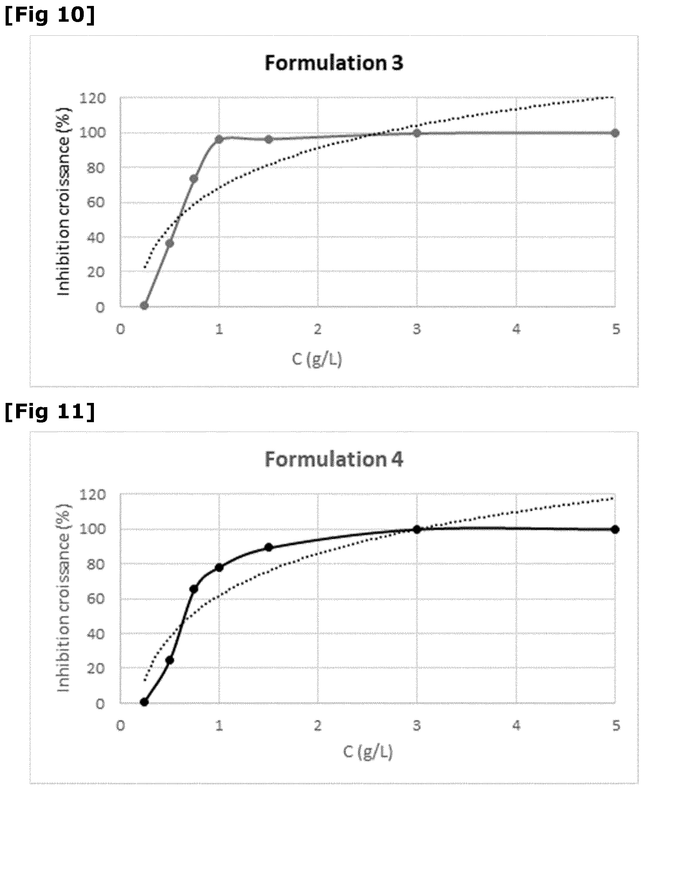

- la figure 10 représente le pourcentage d'inhibition de la croissance *in vitro* sur des disques de feuilles de vigne du champignon *Plasmopara viticola* d'une composition comprenant majoritairement (> 90 % en masse) un polymère d'aluminosilicate de type allophane et du peroxyde d'hydrogène (formulation 3) en fonction de la dose testée (en g/L) ;
- la figure 11 représente le pourcentage d'inhibition de la croissance *in vitro* sur des disques de feuilles de vigne du champignon *Plasmopara viticola* d'une composition comprenant majoritairement (> 90 % en masse) un polymère d'aluminosilicate de type allophane (formulation 4) en fonction de la dose testée (en g/L) ;

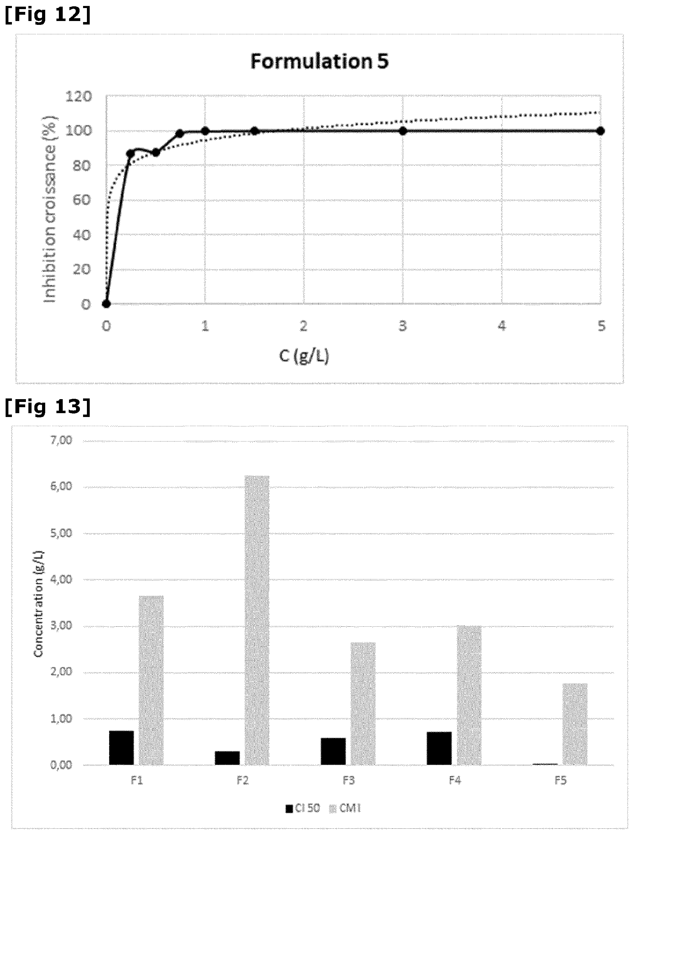

- la figure 12 représente le pourcentage d'inhibition de la croissance *in vitro* sur des disques de feuilles de vigne du champignon *Plasmopara viticola* d'une composition comprenant un mélange de polymères d'aluminosilicate à structure locale de type ILS, ledit mélange étant constitué de 55 % en masse d'imogolite, 40 % en masse d'allophane et 5 % en masse de proto-imogolite (formulation 5) en fonction de la dose testée (en g/L),
- la figure 13 représente l'histogramme des doses inhibant à 50 % la croissance du champignon *Plasmopara viticola* (CI₅₀), ainsi que la concentration minimale inhibitrice (CMI) pour chacune des formulations 1 à 5 testées.

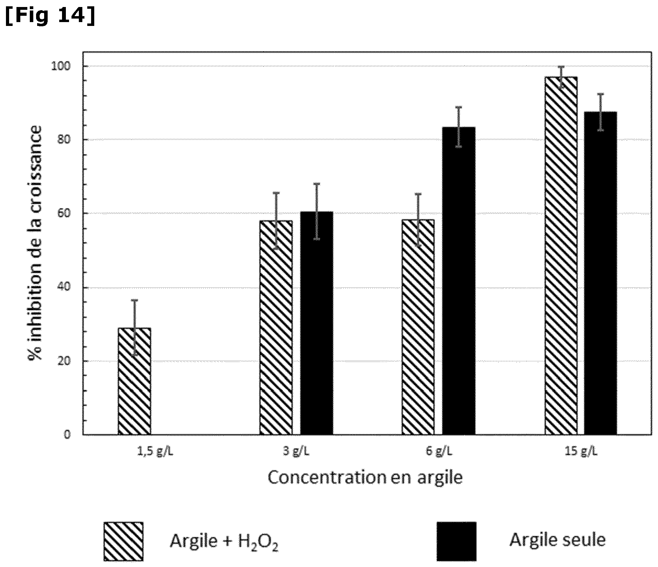

- la figure 14 représente l'histogramme du pourcentage d'inhibition de la croissance du champignon *Plasmopara viticola* sur des plants de vigne d'une composition comprenant majoritairement (> 90 % en masse) un polymère d'aluminosilicate de type allophane en fonction de la dose testée (en g/L) ou d'une composition comprenant majoritairement (> 90 % en masse) un polymère d'aluminosilicate de type allophane et du peroxyde d'hydrogène en fonction de la dose testée (en g/L), et ce à différentes concentrations en allophane.

### EXEMPLES

Réactifs et matériels utilisés dans les exemples :
- Chlorure d'aluminium hexa hydraté (AlCl₃.6(H₂O)), pur à 99 %, Sigma-Aldrich,
- Perchlorate d'aluminium nona hydraté (Al(ClO₄)₃.9(H₂O)), pur à 99 %, Sigma-Aldrich,
- Hydroxyde de sodium (NaOH), pur à 98%, Sigma-Aldrich,
- Tetraéthoxysilane (Si(OCH₂CH₃)₄), pur à 99%, Sigma-Aldrich,
- Eau déionisée,
- Membrane d'ultrafiltration tangentielle (seuil de rétention de 300 kDa) en polysulfone, vendue sous la dénomination commerciale UF20M3, par la société Polymem,
- Membrane de dialyse ayant un seuil de rétention de 6 - 8 kDa, vendue sous la dénomination commerciale Spectra/Por^{™} 1 6 - 8 kD par la société Spectrum^{™} Labs,
- Peroxyde d'hydrogène à 110 volumes (H₂O₂ 30 % en masse), Thermo Scientific,
- Sporanges de *Plasmopara viticola* (Souche Pv2543_1, Hongrie prélevée en 2013).

### EXEMPLE 1 : Synthèse d'un polymère d'aluminosilicate majoritairement (> 90 % en masse) de type imogolite (Argile 1)

À une solution d'eau déionisée contenant 2 mM d'Al(ClO₄)₃·9(H₂O) a été ajouté, sous agitation, du tétraéthoxysilane jusqu'à atteindre un ratio molaire Si/Al égal à 0,55. Après 30 minutes d'agitation, une solution de NaOH à 0,1 M a été ajoutée jusqu'à atteindre un ratio molaire NaOH/Al égal à 2, toujours sous agitation. La solution a ensuite été laissée sous agitation pendant 4 heures puis mise à chauffer à 90°C pendant 7 jours. Une fois refroidie, la solution a ensuite été concentrée par ultrafiltration tangentielle avec une membrane en polysulfone 300 kDa jusqu'à atteindre un facteur de concentration de 100. La solution concentrée ainsi obtenue a ensuite été dialysée en boudin de dialyse constitué d'une membrane Spectra/Por^{™} ayant un seuil de rétention de 6 - 8 kDa contre de l'eau déionisée, jusqu'à ce que la conductivité de l'eau de dialyse soit inférieure à 2 µS/cm. La figure 5 annexée est une photographie de cryo-microscopie électronique à transmission (cryo-MET) de l'Argile 1 ainsi obtenue.

### EXEMPLE 2 : Synthèse d'un polymère d'aluminosilicate majoritairement (> 90 % en masse) de type allophane (Argile 2)

À une solution d'eau déionisée contenant 200 mM d'AlCl₃·6(H₂O) a été ajouté, sous agitation, du tétraéthoxysilane jusqu'à atteindre un ratio molaire Si/Al égal à 0,55. Après 30 minutes d'agitation, une solution de NaOH à 0,1 M a été ajoutée jusqu'à atteindre un ratio molaire NaOH/Al égal à 2, toujours sous agitation. La solution a ensuite été laissée sous agitation pendant 4 heures puis mise à chauffer à 90°C pendant 7 jours. Une fois refroidie, la solution a ensuite été dialysée en boudin de dialyse constitué d'une membrane Spectra/Por^{™} ayant un seuil de rétention de 6 - 8 kDa contre de l'eau déionisée jusqu'à ce que la conductivité de l'eau de dialyse soit inférieure à 2 µS/cm. La figure 6 annexée est une photographie de cryo-microscopie électronique à transmission (cryo-MET) de l'Argile 2 ainsi obtenue.

### EXEMPLE 3 : Synthèse d'un mélange de polymères d'aluminosilicate de type imogolite, allophane et proto-imogolite (Argile 3)

À une solution d'eau déionisée contenant 2 mM d'AlCl₃·6(H₂O) a été ajouté, sous agitation, du tétraéthoxysilane jusqu'à atteindre un ratio molaire Si/Al égal à 0,55. Après 30 minutes d'agitation, une solution de NaOH à 0,1 M a été ajoutée jusqu'à atteindre un ratio molaire NaOH/Al égal à 2, toujours sous agitation. La solution a ensuite été laissée sous agitation pendant 4 heures puis mise à chauffer à 90°C pendant 7 jours. Une fois refroidie, la solution a ensuite été concentrée par ultrafiltration tangentielle avec une membrane en polysulfone 300 kDa jusqu'à atteindre un facteur de concentration de 100. La solution concentrée ainsi obtenue a ensuite été dialysée en boudin de dialyse constitué d'une membrane Spectra/Por^{™} ayant un seuil de rétention de 6 - 8 kDa contre de l'eau déionisée, jusqu'à ce que la conductivité de l'eau de dialyse soit inférieure à 2 µS/cm. On a obtenu un mélange de polymères d'aluminosilicate constitué d'environ 55 % en masse d'imogolite, d'environ 40 % en masse d'allophane et d'environ 5 % en masse de proto-imogolite (Argile 3). La figure 7 annexée est une photographie de cryo-microscopie électronique à transmission (cryo-MET) de l'Argile 3 ainsi obtenue.

### EXEMPLE 4 : Mise en évidence de l'efficacité de 5 formulations à base de polymères d'aluminosilicate vis-à-vis de l'agent responsable du mildiou de la vigne, Plasmopara viticola, in vitro

L'objectif de cet exemple est de mettre en évidence l'efficacité de différentes formulations liquides à base de polymères d'aluminosilicate tels que préparés ci-dessus aux exemples 1 à 3, respectivement Argiles 1 à 3, éventuellement en présence de peroxyde d'hydrogène, vis-à-vis de l'agent responsable du mildiou de la vigne.

### 4.1 Caractéristiques des formulations testées

Différentes formulations liquides à base d'eau déionisée, d'argiles et éventuellement de peroxyde d'hydrogène ont été préparées. Les caractéristiques des différentes formulations liquides testées sont détaillées dans le tableau 1 ci-après :

**[TABLEAU 1]**

| **Formulations** | **Volume préparé** | **Composition** | **Concentration en argile** | **Concentration en H₂O₂** |
|---|---|---|---|---|
| **F1** | 20 mL | Argile 1 + H₂O₂ 30 % m. | 5 g/L | 2,5 g/L |
| **F2** | 20 mL | Argile 1 | 5 g/L | - |
| **F3** | 20 mL | Argile 2 + H₂O₂ 30 % m. | 5 g/L | 2,5 g/L |
| **F4** | 20 mL | Argile 2 | 5 g/L | - |
| **F5** | 20 mL | Argile 3 | 5 g/L | - |

### 4.2 Protocole du test d'efficacité

Des disques d'un diamètre de 18 mm ont été découpés dans des feuilles de vignes et placés dans des boites de Pétri, face supérieure en contact avec du papier Whatman.

Chacune des formulations 1 à 5 ci-dessus a été testée à des doses différentes et telles que détaillées dans le tableau 2 ci-après :

**[Tableau 2]**

| **Doses testées** | **Concentrations en argile (g/L)** |
|---|---|
| **D1** | 0,25 |
| **D2** | 0,50 |
| **D3** | 0,75 |
| **D4** | 1,00 |
| **D5** | 1,50 |
| **D6** | 3,00 |
| **D7** | 5,00 |

Les différentes doses testées ont été obtenues par dilution correspondante de chacune des formulations 1 à 5 avec de l'eau déionisée.

Pour chacune des formulations 1 à 5, chacune des doses testées a été appliquée à l'aide d'un microdiffuseur sur les feuilles de vignes à raison de 1 mL de formulation testée par boite de Pétri, et à raison de 6 à 8 disques de feuilles par concentration testée.

Les disques de feuilles de vigne ont ensuite été séchés avant de procéder à l'inoculation de l'agent phytopathogène (tests extemporanés).

L'inoculation a été effectuée à l'aide d'une suspension dans de l'eau stérile de sporanges du champignon *Plasmopara viticola* à une concentration comprise entre 40 000 et 50 000 sporanges/mL à raison de 3 gouttes de 15 µL par disque de feuille de vigne. Le développement de l'agent pathogène a été évalué après 7 jours d'incubation à 22°C sous forme de pourcentage de croissance. Ces données ont ensuite été transformées en pourcentage moyen d'inhibition de la croissance du champignon dans les modalités traitées par rapport à la modalité témoin (pulvérisée avec de l'eau stérile), selon l'équation 1 suivante : [Equation 1] : $% d ′ inhibition = 100 x \left[1-\frac{% de croissance traités}{% de croissance témoins}\right]$

Pour chacune des formulations testées, il est alors possible de tracer une courbe représentant l'évolution du pourcentage d'inhibition en fonction de la concentration en argile (en g/L) et ainsi de déterminer une valeur correspondant à la dose inhibant à 50 % la croissance du champignon (CI₅₀), ainsi que la concentration minimale inhibitrice (CMI). Les résultats obtenus pour chacune des formulations 1 à 5 testées sont donnés sur les figures 8 à 12 annexées correspondant respectivement aux % d'inhibition de la croissance du champignon calculés pour les différentes doses testées des formulations 1 à 5 (en g/L).

La figure 13 annexée représente l'histogramme des CI₅₀ et des CMI pour chacune des formulations 1 à 5 testées.

Les valeurs de CI₅₀ et de CMI pour chacune des formulations 1 à 5 testées (F1 à F5) sont également présentées dans le tableau 3 ci-dessous :

**[Tableau 3]**

| | **F1** | **F2** | **F3** | **F4** | **F5** |
|---|---|---|---|---|---|
| **CI₅₀ (g/L)** | 0,73 | 0,29 | 0,57 | 0,71 | 0,01 |
| **CMI (g/L)** | 3,66 | 6,23 | 2,64 | 3,01 | 1,75 |

L'ensemble de ces résultats démontrent que, bien que non nécessaire, l'ajout de peroxyde d'hydrogène permet l'augmentation significative de l'efficacité de la formulation 1 d'environ 50 % (CMI = 3,66 g/L pour la formulation 1 comprenant l'Argile 1 et du peroxyde d'hydrogène contre 6,23 g/L pour la formulation 2 ne comprenant que l'Argile 1). Cette conclusion s'applique également vis-à-vis des résultats obtenus avec l'Argile 2 (2,64 g/L pour la formulation 3 comprenant l'Argile 2 et du peroxyde d'hydrogène contre 3,01 g/L pour la formulation 4 ne comprenant que l'Argile 2).

Enfin, d'après les résultats de CMI, la formulation 5 préparée à base d'Argile 3 uniquement (sans peroxyde d'hydrogène) est la plus efficace contre la croissance du mildiou de la vigne (CMI = 1,75 g/L).

### EXEMPLE 5 : Mise en évidence de l'efficacité de 7 formulations à base de polymères d'aluminosilicate vis-à-vis de l'agent responsable du mildiou de la vigne, Plasmopara viticola, in vivo

L'objectif de cet exemple est de mettre en évidence l'efficacité de différentes formulations liquides à base de polymères d'aluminosilicate tels que préparés ci-dessus à l'exemple 2 (Argile 2), à différentes concentrations et en présence ou non de peroxyde d'hydrogène, vis-à-vis de l'agent responsable du mildiou de la vigne.

### 5.1 Doses testées

Les formulations liquides F6 à F12 ayant la composition indiquée dans le tableau 4 ci-après ont été préparées :

**[TABLEAU 4]**

| **Formulations/Doses** | **Combinaison avec H₂O₂** | **Concentrations en argile (g/L)** | **Concentration en H₂O₂ (g/L)** |
|---|---|---|---|
| **F6** | Oui | 1,5 | 0,75 |
| **F7** | Non | 3,0 | - |
| **F8** | Oui | 3,0 | 1,5 |
| **F9** | Non | 6,0 | - |
| **F10** | Oui | 6,0 | 3,0 |
| **F11** | Non | 15,0 | - |
| **F12** | Oui | 15,0 | 7,5 |

### 5.2 Protocole du test d'efficacité

L'expérience a été réalisée sur des plants greffés soudés de Cabernet Sauvignon provenant des Pépinières Mercier (Vix, France).

Pour chacune des doses testées, 5 plants ont été utilisés pour les tests d'efficacité fongicide qui ont ensuite été réalisés *in vitro.*

Chacune des formulations à tester a donc été pulvérisée aux doses indiquées dans le tableau 4 ci-dessus sur la totalité des plants à l'aide d'un microdiffuseur à raison d'environ 20 mL par plant.

Pour évaluer l'efficacité fongicide des différentes doses, 5 feuilles (3^{ème} ou 4^{ème} feuille depuis l'apex) ont été prélevées à raison de 1 feuille par plant une fois les plants secs juste après le traitement.

Les feuilles de vigne ont ensuite été rapportées au laboratoire. Des disques de feuilles de 20 mm de diamètre ont été découpés dans les feuilles de vignes ainsi traitées.

3 boites de Pétri contenant chacune 6 disques de feuilles de vigne ont été préparées pour chaque dose testée selon le protocole indiqué ci-dessus à l'exemple 4. L'inoculation a notamment été effectuée à l'aide d'une suspension sporanges du champignon *Plasmopara viticola* à une concentration comprise entre 40 000 et 50 000 sporanges /ml à raison de 3 gouttes de 15 µL par disque de feuilles.

Les évaluations de la croissance des agents pathogènes ont été réalisées après 7 jours d'incubation à 22°C selon le protocole indiqué ci-dessus à l'exemple 4.

Les résultats obtenus sont reportés sur la figure 14 annexée sur laquelle l'inhibition de la croissance du champignon (en % ) est donnée pour chacune des doses testées (en g/L) en présence de peroxyde d'hydrogène (barres hachurées) ou en absence de peroxyde d'hydrogène (barres noires).

Ces résultats montrent que la pulvérisation d'une composition à base d'Argile 2 telle que préparée à l'exemple 2, éventuellement en combinaison avec du peroxyde d'hydrogène permet d'inhiber la croissance du mildiou de la vigne. Cet exemple démontre qu'une telle composition peut donc être utilisée à titre préventif dans les vignes pour empêcher la croissance ultérieure de ce microorganisme phytopathogène.

Par ailleurs, et de façon tout à fait surprenante, on peut remarquer qu'à certaines doses d'argile testées, (3 g/L et 6 g/L), l'utilisation d'argile seule est aussi efficace (à 3 g/L), voire plus efficace (à 6 g/L), que lorsqu'elle est combinée à du peroxyde d'hydrogène.

## Revendications

1. Utilisation non thérapeutique d'au moins un polymère d'aluminosilicate ayant une structure locale de type imogolite à titre d'ingrédient actif contre les microorganismes phytopathogènes.

2. Utilisation selon la revendication 1, **caractérisée en ce que** les polymères d'aluminosilicate sont choisis parmi les imogolites, les allophanes et les proto-imogolites, leurs dérivés respectifs et leurs mélanges.

3. Utilisation selon la revendication 1 ou 2, **caractérisée en ce que** les polymères d'aluminosilicate sont choisis parmi les mélanges de polymères constitués de 5 à 90 % en masse d'imogolite et/ou d'un dérivé d'imogolite, de 5 à 90 % en masse d'allophane et/ou d'un dérivé d'allophane, et de 5 à 90 % en masse de proto-imogolite et/ou d'un dérivé de proto-imogolite, la somme de ces pourcentages individuels étant égale à 100 %.

4. Utilisation selon l'une quelconque des revendications 1 à 3, **caractérisée en ce que** les polymères d'aluminosilicate sont utilisés en combinaison avec du peroxyde d'hydrogène.

5. Utilisation selon l'une quelconque des revendications 1 à 3, **caractérisée en ce que** les polymères d'aluminosilicate sont choisis parmi des allophanes non dopés.

6. Utilisation selon la revendication 5, **caractérisée en ce que** lesdits allophanes non dopés sont utilisés sans être combinées à du peroxyde d'hydrogène.

7. Utilisation selon l'une quelconque des revendications précédentes, **caractérisée en ce que** les microorganismes phytopathogènes sont des champignons phytopathogènes ou des bactéries phytopathogènes.

8. Utilisation selon l'une quelconque des revendications précédentes, **caractérisée en ce que** les microorganismes phytopathogènes sont des pseudochampignons de la famille des Peronosporaceae de la classe des Oomycètes.

9. Procédé pour lutter contre l'apparition de maladies occasionnées par des microorganismes phytopathogènes chez les plantes, ledit procédé comprenant au moins une étape d'application, sur lesdites plantes, d'une composition comprenant, à titre d'ingrédient actif contre lesdits microorganismes phytopathogènes, au moins un polymère d'aluminosilicate ayant une structure locale de type imogolite.

10. Procédé selon la revendication 9, **caractérisé en ce qu'**il est appliqué au traitement de la vigne, des pieds de pommes de terre ou des pieds de tomates.

11. Procédé selon la revendication 9 ou 10, **caractérisé en ce que** la concentration en polymères d'aluminosilicate au sein de ladite composition varie de 0,1 à 100 g/L.

12. Procédé selon l'une quelconque des revendications 9 à 11, **caractérisé en ce que** ladite composition contient du peroxyde d'hydrogène.

13. Procédé selon la revendication 9 ou 10, **caractérisé en ce que** ladite composition ne contient pas de peroxyde d'hydrogène et **en ce que** les polymères d'aluminosilicates sont choisis parmi les allophanes.

14. Procédé selon la revendication 13, **caractérisé en ce que** les allophanes sont des allophanes non dopés.

15. Procédé selon l'une quelconque des revendications 9 à 14, **caractérisé en ce que** l'étape d'application consiste en une étape d'épandage ou de pulvérisation de ladite composition sur les parties aériennes de la plante à traiter.

16. Procédé selon l'une quelconque des revendications 9 à 15, **caractérisé en ce que** l'on applique une dose de polymères d'aluminosilicate comprise entre 100 g et 5 kg par hectare.

17. Procédé selon l'une quelconque des revendications 9 à 16, **caractérisé en ce que** ledit procédé est mis en œuvre pour lutter contre le mildiou, et **en ce que** le nombre d'applications de ladite composition varie de 5 à 15 applications par an en moyenne.

## Patentansprüche

1. Nicht-therapeutische Verwendung von mindestens einem Aluminosilikatpolymer mit einer lokalen Struktur vom Typ Imogolit als Wirkstoff gegen phytopathogene Mikroorganismen.

2. Verwendung nach Anspruch 1, **dadurch gekennzeichnet, dass** die Aluminosilikatpolymere ausgewählt sind aus Imogoliten, Allophanen und Proto-Imogoliten, deren jeweiligen Derivaten sowie deren Mischungen.

3. Verwendung nach Anspruch 1 oder 2, **dadurch gekennzeichnet, dass** die Aluminosilikatpolymere ausgewählt sind aus Polymermischungen, bestehend aus 5 bis 90 Massen-% Imogolit und/oder einem Imogolitderivat, 5 bis 90 Massen-% Allophan und/oder einem Allophanderivat und 5 bis 90 Massen-% Proto-Imogolit und/oder einem Proto-Imogolitderivat, wobei die Summe dieser einzelnen Prozentsätze 100 % beträgt.

4. Verwendung nach einem der Ansprüche 1 bis 3, **dadurch gekennzeichnet, dass** die Aluminosilikatpolymere in Kombination mit Wasserstoffperoxid verwendet werden.

5. Verwendung nach einem der Ansprüche 1 bis 3, **dadurch gekennzeichnet, dass** die Aluminosilikatpolymere aus undotierten Allophanen ausgewählt sind.

6. Verwendung nach Anspruch 5, **dadurch gekennzeichnet, dass** die undotierten Allophane verwendet werden, ohne mit Wasserstoffperoxid kombiniert zu werden.

7. Verwendung nach einem der vorstehenden Ansprüche, **dadurch gekennzeichnet, dass** die phytopathogenen Mikroorganismen phytopathogene Pilze oder phytopathogene Bakterien sind.

8. Verwendung nach einem der vorstehenden Ansprüche, **dadurch gekennzeichnet, dass** die phytopathogenen Mikroorganismen Pseudopilze der Familie der Peronosporaceae aus der Klasse der Oomyceten sind.

9. Verfahren zur Bekämpfung des Auftretens von Krankheiten, die durch phytopathogene Mikroorganismen bei Pflanzen verursacht werden, wobei das Verfahren mindestens einen Schritt des Aufbringens einer Zusammensetzung auf die Pflanzen umfasst, die als Wirkstoff gegen die phytopathogenen Mikroorganismen mindestens ein Aluminosilikatpolymer mit einer lokalen Struktur vom Typ Imogolit umfasst.

10. Verfahren nach Anspruch 9, **dadurch gekennzeichnet, dass** es zur Behandlung von Weinreben, Kartoffelpflanzen oder Tomatenpflanzen angewendet wird.

11. Verfahren nach Anspruch 9 oder 10, **dadurch gekennzeichnet, dass** die Konzentration an Aluminosilikatpolymeren in der Zusammensetzung von 0,1 bis 100 g/L variiert.

12. Verfahren nach einem der Ansprüche 9 bis 11, **dadurch gekennzeichnet, dass** die Zusammensetzung Wasserstoffperoxid enthält.

13. Verfahren nach Anspruch 9 oder 10, **dadurch gekennzeichnet, dass** die Zusammensetzung kein Wasserstoffperoxid enthält und dass die Aluminosilikatpolymere aus Allophanen ausgewählt sind.

14. Verfahren nach Anspruch 13, **dadurch gekennzeichnet, dass** die Allophane undotierte Allophane sind.

15. Verfahren nach einem der Ansprüche 9 bis 14, **dadurch gekennzeichnet, dass** der Schritt des Aufbringens aus einem Schritt des Verteilens oder Sprühens der Zusammensetzung auf die oberirdischen Teile der zu behandelnden Pflanze besteht.

16. Verfahren nach einem der Ansprüche 9 bis 15, **dadurch gekennzeichnet, dass** eine Dosis von Aluminosilikatpolymeren zwischen 100 g und 5 kg pro Hektar aufgebracht wird.

17. Verfahren nach einem der Ansprüche 9 bis 16, **dadurch gekennzeichnet, dass** das Verfahren zur Bekämpfung von Mehltau eingesetzt wird und dass die Anzahl der Anwendungen der Zusammensetzung im Durchschnitt von 5 bis 15 Anwendungen pro Jahr variiert.

## Claims

1. A non-therapeutical use of at least one aluminosilicate polymer with an imogolite local structure as an active ingredient against phytopathogenic microorganisms.

2. The use according to claim 1, **characterized in that** the aluminosilicate polymers are selected from imogolites, allophanes and proto-imogolites, their respective derivatives and mixtures thereof.

3. The use according to claim 1 or 2, **characterized in that** the aluminosilicate polymers are selected from polymer mixtures consisting of from 5 to 90% by weight of imogolite and/or an imogolite derivative, from 5 to 90% by weight of allophane and/or an allophane derivative, and from 5 to 90% by weight of proto-imogolite and/or a proto-imogolite derivative, the sum of these individual percentages being equal to 100%.

4. The use according to any one of claims 1 to 3, **characterized in that** the aluminosilicate polymers are used in combination with hydrogen peroxide.

5. The use according to any one of claims 1 to 3, **characterized in that** the aluminosilicate polymers are chosen from undoped allophanes.

6. The use according to claim 5, **characterized in that** said undoped allophanes are used without being combined with hydrogen peroxide.

7. The use according to any one of the preceding claims, **characterized in that** the phytopathogenic microorganisms are phytopathogenic fungi or phytopathogenic bacteria.

8. The use according to any one of the preceding claims, **characterized in that** the phytopathogenic microorganisms are pseudo-fungi of the Peronosporaceae family of the Oomycetes class.

9. A method for combating the occurrence of diseases caused by phytopathogenic microorganisms in plants, said method comprising at least one step of applying, to said plants, a composition comprising, as active ingredient against said phytopathogenic microorganisms, at least one aluminosilicate polymer having a local imogolite-type structure.

10. The method according to claim 9, **characterized in that** it is applied to the treatment of grapevines, potato plants or tomato plants.

11. The method according to claim 9 or 10, **characterized in that** the concentration of aluminosilicate polymers within said composition varies from 0.1 to 100 g/L.

12. The method according to any one of claims 9 to 11, **characterized in that** said composition contains hydrogen peroxide.

13. The method according to claim 9 or 10, **characterized in that** said composition does not contain hydrogen peroxide and **in that** the aluminosilicate polymers are chosen from allophanes.

14. The method according to claim 13, **characterized in that** the allophanes are undoped allophanes.

15. The method according to any one of claims 9 to 14, **characterized in that** the application step consists of a step of spreading or spraying said composition onto the aerial parts of the plant to be treated.

16. The method according to any one of claims 9 to 15, **characterized in that** a dose of aluminosilicate polymers of between 100 g and 5 kg per hectare is applied.

17. The method according to any one of claims 9 to 16, **characterized in that** said method is implemented to combat downy mildew, and **in that** the number of applications of said composition varies from 5 to 15 applications per year on average.
